Europäisches Patentamt

European Patent Office

Office européen des brevets

(11) Publication number: **0 228 799**
**A2**

## (12) EUROPEAN PATENT APPLICATION

(21) Application number: 86308949.6

(51) Int. Cl.4: **B29C 45/77**

(22) Date of filing: 17.11.86

(30) Priority: 18.11.85 JP 256735/85
06.12.85 JP 273471/85
06.12.85 JP 273472/85
26.12.85 JP 292219/85

(43) Date of publication of application:
15.07.87 Bulletin 87/29

(84) Designated Contracting States:
DE FR GB IT

(71) Applicant: THE JAPAN STEEL WORKS, LTD.
12-1, Yurakucho-1-chome, Chiyoda-ku
Tokyo(JP)

(72) Inventor: Yokota, Akira
No. 6-1, Funakoshi Minami 1-chome
Aki-ku Hiroshima-shi Hiroshima(JP)
Inventor: Egi, Tadao
6-1, Funakoshi Minami-chome
Aki-ku Kiroshima-shi Hiroshima(JP)

(74) Representative: Jennings, Roy Alfred et al
GILL JENNINGS & EVERY 53-64 Chancery
Lane
London WC2A 1HN(GB)

(54) Method of controlling an injection molding operation and apparatus therefor.

(57) An injection molding machine having an injection screw (2) operated by a ram (3) has the speed of the screw (2) sensed by a sensor (7) and/or the pressure applied to the ram (3) sensed by means of a sensor (6). The sensed values are converted into electrical signals by converters (8, 9). If both speed and pressure are sensed, the signals are multiplied together by a multiplier (I0) and the signal or the final multiplied signal is time integrated by an integrator (II). The integrated signal is compared in a comparator - (I3) with a preset value or range from a device (I4) and the operation of the ram (3) is controlled in dependence upon the relationship between the integrated signal and the preset value or range in order to change-over the force on the injection screw from that necessary to bring about injection to a holding pressure at the end of injection.

*FIG. 4*

## Method of Controlling an Injection Molding Operation and Apparatus Therefor

This invention relates to a method of controlling an injection molding operation and to injection molding apparatus comprising a mold cavity, an injection screw, a ram, and means for applying a driving pressure from the ram to the injection screw to move the screw at an injection speed to force a resin to fill the mold cavity.

An injection operation performed by an injection molding machine consists essentially of the steps of starting injecting molten resin, allowing the molten resin to reach the far end of a cavity (known as a filling process), and then compensating for the contraction of the molten resin in the cavity as it cools and solidifies (known as a holding pressure process).

In the conventionally known programmed injection operation in which the speed of an injection screw (or plunger) is controlled with a predetermined program during the filling process, the molten resin filling rate is controlled by changing the filling pressure or rate depending on the position of the screw. During the holding pressure process, moreover, there is also a conventionally known method for controlling holding pressure in a plurality of stages using a timer. Furthermore, there has been employed a method for switching the filling process to the holding pressure process depending on the position of the screw, i.e., a set position of the screw during the filling process. Other conventionally known methods include controlling the switching of such a process by means of an injection ram (hydraulic pressure) or the pressure of resin within the cavity and of reduction in the moving speed of the screw.

A conventional method for monitoring an irregular injection process has been so arranged as to monitor whether a value detected is within a preset range and to give a signal when the value detected is out of the preset range. This value is obtained by detecting filling time (from the commencement of injection up to switching over to holding pressure), the quantity of a cushion, hydraulic pressure in an injection plunger, resin pressure in a cavity or the like.

The control of switching the filling process in the injection speed control region to the holding pressure process in the holding pressure control region according to the prior art has been conducted, as described above, by detecting the position of the screw, injection ram pressure or the molten resin pressure in the cavity.

On the other hand, it is preferred to switch over to pressure control in the holding pressure process the moment the molten resin has reached the endmost of the cavity, i.e., the filling process has been completed. However, there are the following problems inherent in the prior art.

In the first place, the conventional injection molding machine designed to provide such switching control depending on the position of the screw makes it difficult to detect when filling has actually been completed depending on the position of the screw.

The initially set position of the screw just prior to the injection process is determined by the position where molten resin is weighed and the set value of the screw-drawing (hereinafter called the "suck-back") stroke for preventing the molten resin from dripping from the nozzle. The set position of the screw just prior to the injection process is set by an apparatus for setting the backmost position to which it can move back. However, the position of the screw just prior to the injection process unavoidably tends to deviate from the preset value during the actual injection molding.

As shown in Fig. I, the molten resin pressure on the flow side (2-d) (right-hand side of Fig. I) of a screw 2 within a cylinder I upon the completion of the weighing or suck-back is higher than that at its front end (2-a) before and behind a back-flow ring - (2-b). As a result, a small amount of the molten resin (2-c) flows from the flow side (2-c) to the front end (2-a) of the screw 2 as shown by an arrow even after the weighing or suck-back is completed. The screw 2 then reacts and tends to be pressed against an injection ram 3 driving the screw 2 and thus changes its position.

In other words, the value set by the apparatus for setting the backmost position to which the screw can move back differs from the actual position thereof immediately prior to the injection process. Moreover, that actual position immediately prior to the injection process varies with various conditions such as a molding cycle, the number of revolutions of the screw, rotational inertia, back pressure and so on. Since the position for switching the injection speed is determined by the absolute position of the screw relative to the cylinder during the injection process, the fluctuation of the above value results in the fluctuation of the shot volume up to a position where the speed is switched for the first time. The fluctuation of the shot volume up to the position where the injection speed is switched during the injection process is maintained until the injection process is terminated and this poses a problem in that the surface conditions, the dimensions and the weight of a molded product are caused to fluctuate.

In consequence, in the prior art, the absolute position of a screw relative to a cylinder is preset and the value detected by a screw position detector is compared with the above set value so as to effect switching control. However, this prior art method still makes it difficult to detect the actual completion of the filling process depending on the screw position. That is, a fill of molten resin is determined by injection shot volume, which is given by the following equation:

$$V = \pi/4 \bullet D^2 \bullet S$$

where V is the injection shot volume and D is the diameter of the screw 2. S is the injection stroke.

Accordingly, the injection shot volume is affected by the fluctuation of the injection stroke to a magnified degree and the fill actually obtained shows a serious error even though the screw position is caused to fluctuate only slightly. In order to secure the switching control properly depending on the screw position, an extremely fine set up is required and an injection molding machine itself needs repetitive reproducibility with strict positional accuracy. If the position thus finely set up is shifted only slightly, the resin is allowed to reach the endmost of the cavity to have filling completed before the holding pressure process is started or, on the contrary, the holding pressure process is started before the filling is completed. In the case of the late shifting to the holding pressure process, the cavity peak pressure rises up to the set pressure at the time of injection speed control, thus causing defective molding with a burr. On the other in the case of premature shifting to the holding pressure process, the filling speed is reduced before resin filling is completed. The repetitive reproducibility of molding work is anyhow impeded in both cases. Since this problem is well known, there has been employed a method for switching the injection speed control region to the pressure control region prior to the completion of filling, i.e., a method for controlling the speed of filling the cavity with molten resin with pressure prior to the completion of filling but not directly controlling the filling speed with the injection speed. On the other hand, the injection speed is an important factor for controlling the surface conditions of a molded product and therefore the region immediately prior to the completion of filling unavoidably becomes unstable so that a good molded product cannot be reliably obtained.

In the prior art according to which the filling process is switched over to the holding pressure process in response to the above injection ram pressure, load pressure increases as the mold is filled with molten resin, whereby the pressure is detected to find the point of time at which filling is completed and start the holding pressure process. However, because the passing resistance of the molten resin in the nozzle, the spool and the gate relies on the injection speed, the passing resistance changes if the injection speed is changed, thus causing the ram pressure immediately prior to the completing of filling to change. Consequently, the problem is that the switching pressure of the injection ram for setting the point at which the filling process is switched to the holding pressure process must be changed whenever molding conditions are altered.

When the pattern of the injection speed is controlled in a multi-stage during the filling process, the injection ram pressure changes, i.e., the load pressure also varies as the injection speed changes. As a result, the control for switching the filling process to the holding pressure process by detecting the injection ram pressure has required providing a control region for switching from filling to holding pressure by detecting the injection ram pressure.

The above problem is also posed not only when the filling process is switched to the holding pressure process by means of the injection ram pressure but also when such switching is carried out by detecting resin pressure at the front end of the screw cylinder or in the molding cavity to reduce thereafter the injection speed.

The conventional method for monitoring the injection process as a whole depends on momentary data at a point of time. Such data is hydraulic pressure in the injection plunger at the point of time the filling process is switched to the holding pressure process, maximum hydraulic pressure during the injection process, resin pressure in the molding cavity, cushion quantity in the injection cylinder when the injection process is terminated or filling time (the time required until the moment the holding pressure process is started).

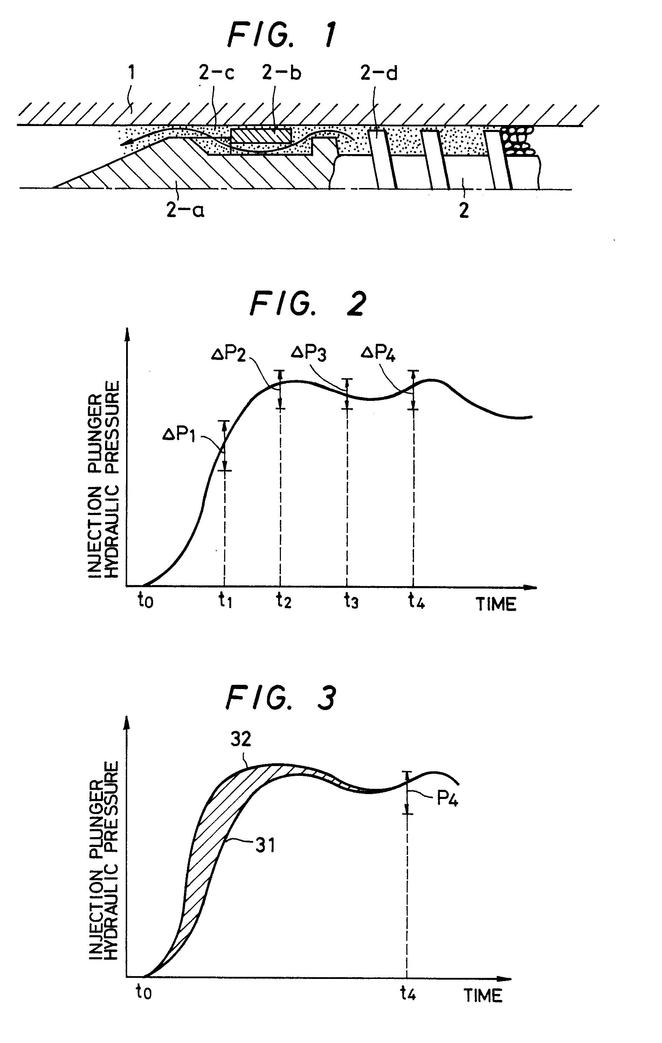

In other words, the whole injection process is monitored substitutionally using the momentary data and, even though the substitutional data is within the monitoring range, the whole injection process at another point of time cannot always be said to be normal. For the above reason, attempts are made to cover the possible whole sequence of the injection process by increasing the number of monitoring points of time. However, by increasing the number of monitoring points of time, the number of set numbers at the time of monitoring proportionally increases, thus making the operation complicated. Shown in Fig. 2 is the method of detecting hydraulic pressure in the injection plunger on the basis of monitoring different points of time ($t_1$-$t_4$), comparing the value obtained at each with a corresponding preset reference value or a range ( $P_1$-$P_4$) and giving a signal only when the monitored is excessively shifted from the reference value. When there are provided many time monitoring points, the operation becomes extremely complicated and unpractical unless the reference values or the ranges are set automatically, e.g., by predetermined sampling points relative to a normal waveform. Then reference values or ranges can be automatically determined by means of a program. Even if the above automatic method is employed, control software will also become complicated and expensive.

To solve the problems inherent in the prior art, a reference value for switching a filling process to a holding pressure process must increase monotonically as the injection process time passes and further the value must have a decisive meaning during the course of filling a mold cavity.

Even though the value is one monotonically increasing as the injection process times elapses, restrictions conventionally imposed by the pressure or injection speed detection are unnecessary, provided that a switching-to-holding pressure signal is given.

The present invention is based on the concept of detecting such a value on the basis of the energy required for moving an injection ram during the injection process. The amount of energy, which is needed to fill the mold cavity with molten resin to solve the above problems is determined and the holding pressure process is started at the point of time that the total energy value reaches a predetermined value.

According to one aspect of this invention, a method of controlling an injection molding operation is characterised by the steps of applying a driving pressure from a ram to an injection screw to move the screw at an injection speed to force resin to fill a mold cavity; detecting the value of the injection speed of the screw and/or the value of an operational pressure, the operational pressure being the driving pressure on the ram or the pressure of the resin in front of the screw, or the pressure in the mold cavity; converting the detected value or values into an electrical signal; and integrating the electrical signal over a period of time to produce an integrated signal.

According to another aspect of the invention, injection molding apparatus as initially described is characterised by means for detecting the value of said injection speed of the screw and/or the value of an operational pressure, the operational pressure being the driving pressure, the pressure of the resin in front of the screw, or the pressure in the mold cavity; means for converting the detected value or values into an electrical signal; and means for integrating the signal over a period of time to produce an integrated signal.

An example of a method and of apparatus in accordance with the invention will now be described with reference to the accompanying drawings in which:-

Figure 1 is a diagram showing the flow of molten resin within a screw when it is fully loaded.

Figure 2 is a diagram showing a conventional monitoring method.

Fig. 3 is a diagram showing deviation according to the present invention.

Fig. 4 is a diagram showing an embodiment of the present invention.

Fig. 5 is a diagram showing the operation according to the present invention.

Figs. 6A, B are block diagrams showing the embodiment of the present invention.

Fig. 7 is a diagram showing another embodiment of the present invention.

Fig. 8 is a block diagram showing the embodiment of the present invention.

Fig. 9 is a diagram showing the operation according to the present invention.

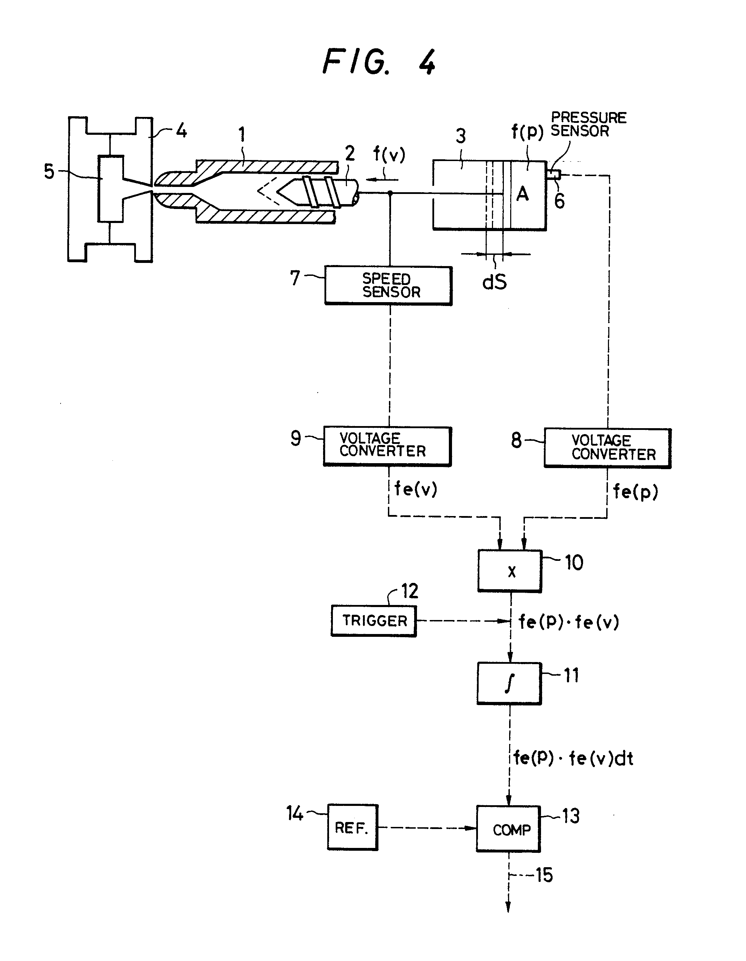

Referring to Fig. 4, an apparatus according to the present invention will be described.

The varying quantity of oil in an injection ram 3 is multiplied by injection ram pressure to obtain a value, i.e., $f(p) \bullet A \bullet ds$ which is the energy applied to a mold cavity per unit time where $f(p)$ is the injection ram pressure varying with injection, A is the area of the injection ram contributing to injection power and ds is the injection stroke per unit time.

In other words, the integral E of the energy applied to the mold cavity as the injection process time passes is expressed by

$$E = A \bullet \int f(p) \bullet ds$$

Moreover, $ds = f(v) \bullet dt$ and so that the integral is expressed by

$$E = A \bullet \int f(p) \bullet f(v) \bullet dt$$

where $f(v)$ is the speed of the screw for moving the distance ds, dt is the unit time of the screw for moving the distance, and A is a constant.

Since A is a constant, substitution is possible if $f(p)$ multiplied by $f(v)$ is integrated in terms of time during the filling process to produce the energy applied to the mold cavity.

The method according to the present invention comprises detecting the energy applied to the molding cavity and switching the filling process to the holding pressure process at the point of time the integrated detected value reaches the preset reference value, so that the constant energy applied to the mold cavity at each molding shot stabilizes the quality of a molded product. Moreover, since the commencement of integration is set at the point of time molten resin reaches the molded product portion excluding the spool runner of the mold, the energy applied to the molded product portion is made detectable by designating the position where integration in the injection stroke is started by means a timer so as to slightly shift that position from the injection starting point.

To solve the above problems, the restrictive range conventionally employed in the form of pressure or injection speed detection is unnecessary, provided the switching signal is given according to the value monotonically increasing as time lapses with the commencement of injection. Moreover, since that value monotonically increases, it may be used as not only the switching-to-holding pressure signal but also an injection speed (filling process) switching signal.

To solve the above problems, the injection speed switching, injection pressure switching or switching-to-holding pressure is provided according to the present invention with the shot volume (fill) for the actual quantity of molten resin injected into the mold after the commencement of injection.

As a first solution according to the present invention, the moving speed (f(v), which is a function of time) of the continuously changing screw is detected so as to detect the moving stroke ($\Delta S$) of the screw during the injection process and, together with the injection starting signal, the value f(v) is integrated over time (i.e., $\int f(v) \bullet dt$). When the time integrated value coincides with the preset value, a signal is given and used to control the injection process. This means that, if the moving stroke ($\Delta S$) of the screw during the injection process is detected, the injection volume of molten resin is expressed by $A \bullet (\Delta S)$ because the inner diameter of the cylinder is constant as far as its portion in which the screw moves during the injection process is concerned and because the section A of the inner cylindrical portion of the cylinder is also constant.

As a second solution according to the present invention, ram hydraulic pressure which is continuously changing in the injection or the resin pressure (f(p), which is a function of time) at the front end of the screw cylinder or in the mold cavity is detected and, together with the injection starting signal, the value f(p) is integrated over time (i.e., $\int f(p) \bullet dt$). When the time integrated value coincides with the preset value, a signal is given and used to control the injection process. This means the filling operation of the cavity, i.e., the fill is indirectly detected because the filling pressure changes with passing resistance in the cavity.

With the construction according to the present invention, actual injection speed switching, injection pressure switching or switching-to-holding pressure can be carried out while the per shot quantity of molten resin actually injected (filled in) the mold is kept constant despite fluctuations of the position of the screw immediately prior to injection.

To solve the problems conventionally posed, it is only necessary to monitor the integrated value of data during the injection process but not the value of certain data (e.g., hydraulic pressure in the injection plunger) at a certain point of time during the injection process. In consequence, the present invention is intended to monitor the time integrated value of hydraulic pressure in the injection plunger.

Fig. 3 illustrates the gist of the present invention in reference to Fig. 2. As shown in Fig. 3, when an irregular waveform 32 in contrast to a normal hydraulic pressure waveform 3l is generated, the conventional multipoint monitoring method is incapable of detecting the irregularity because an attempt to monitor the irregularity at one point after the commencement of injection, e.g., at time $t_i$ only, is meaningless since the pressures at $t_i$ agree with pressures at other times, though such a method is still able to detect irregularities.

In the present invention, however, hydraulic pressure in the injection plunger is converted into an electrical quantity and its time-varying values are monitored by subjecting them to time integration up to $t_i$ and the portion shown by slanting lines is generated as a deviating quantity, whereby its detection causes a signal to be produced.

To solve the problems conventionally posed according to the present invention, the energy required for the injection process during the injection process (from the commencement of injection up to the termination of the holding pressure process), i.e., the energy consumption while the mold cavity is filled with molten resin with the holding pressure process subsequently effected is detected and whether the value detected is within the predetermined reference range is determined, whereby a signal is produced in case the value is out of that range.

As set forth above, it is solely necessary to multiply the instantaneous pressure f(p) by velocity f(v) and time integrate the product during the injection process to obtain the total energy applied to the mold cavity 5 during the injection process and this value is monitored according to the present invention. In the above equations, $\int f(p) \bullet f(v) \bullet dt$ should be monitored since A is a constant.

Referring again to Fig. 4, a specific embodiment of the present invention will be described. A sensor 6 attached to the ram 3 detects injection ram pressure. Its output is converted by an injection ram voltage converter 8 into a voltage, whose value is assumed to be $f_e(p)$. A sensor 7 attached to the screw 2 detects injection speed. Its output is converted by an injection speed voltage converter 9 into a voltage, whose value is assumed to be $f_e(v)$. Both the values are multiplied by a multiplier 10 to produce $(f_e(p) \bullet f_e(v))$.

Subsequently, together with a signal produced by an integration starting trigger generator 12, the value $(f_e(p) \bullet f_e(v))$ is subjected by an integrator 11 to time integration to produce an integrated value of $f_e(p) \bullet f_e(v) \bullet dt$.

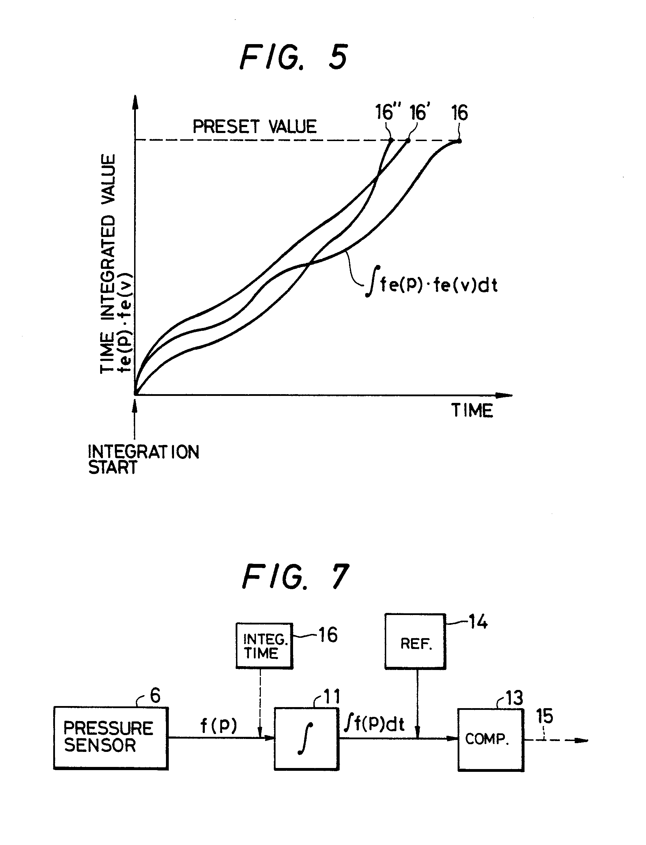

The integrated value $(\int f_e(p) \bullet f_e(v) \bullet dt)$ is compared by a comparator 13 with a value always preset by a reference value setting apparatus and a signal 15 is produced when they coincide with each other. This operation is conducted as shown in Fig. 5.

The signal 15 allows switching-to-holding pressure or injection speed switching as part of injection process control. It becomes thus possible to proceed to the next process while the energy applied to a mold during the filling process is kept constant.

Signals 16, 16', 16" in Fig. 5 designate the point of proceeding to the next process when the reference value preset in the reference value setting apparatus 14 is reached even in the injecting - (filling) state where integrating passages are different.

The energy applied to the mold cavity during the filling process can thus always be kept constant according to the present invention and the quality of molded products is increasingly stabilized.

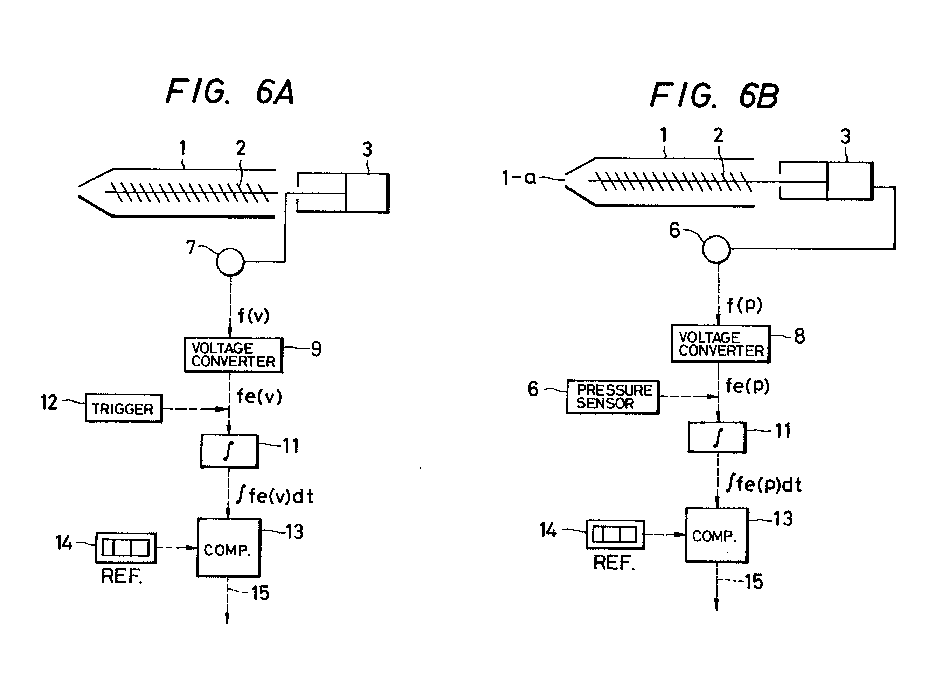

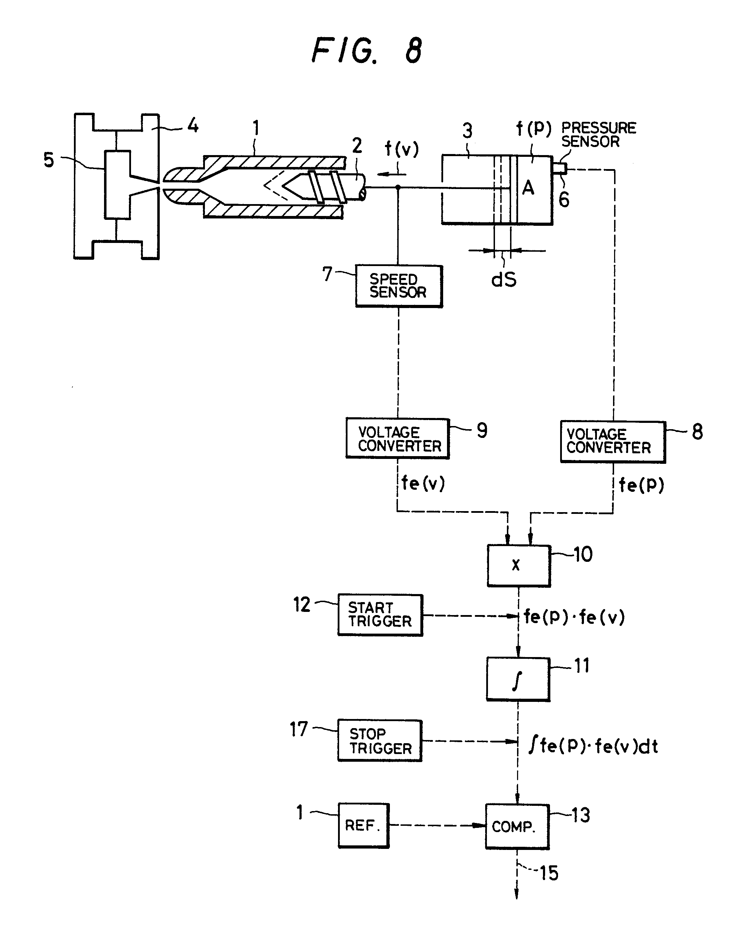

Fig. 6A is a diagram showing another embodiment of the present invention. A screw speed detector 7 is used to detect the moving speed of the screw 2 at the time of injection. The moving speed $f(v)$ of the screw 2 is converted by a speed voltage converter 9 into a voltage. A value after conversion is assumed to be $f_e(v)$.

Subsequently, the integrator 11 integrates the value $f_e(v)$ controlled by a timing signal produced by the integration starting trigger generator 12 simultaneously with the commencement of injection. The integrated value is $\int f_e(v) \bullet dt$. The integrated value $\int f_e(v) \bullet dt$ is compared by the comparator 13 with a value always preset in the reference value setting apparatus 14 and a signal 15 is produced when they coincide with each other.

The signal 15 allows injection speed switching, injection pressure switching as part of injection process control or switching-to-holding pressure.

Fig. 6B is a diagram showing still another embodiment of the present invention.

The pressure sensor 6 detects injection ram pressure. Its output is converted by the pressure voltage converter 15 into voltage. The current injection ram pressure and the value thus converted into voltage are assumed to be $f(p)$ and $f_e(p)$.

Subsequently, the value $f_e(p)$ is time integrated by an integrator 7 beginning with a signal produced by an integration starting trigger generator 6 simultaneously with the commencement of injection. The integrated value is $\int f_e(p) \bullet dt$.

Simultaneously, the integrated value $(\int f_e(p) \bullet dt)$ is compared in the comparator 13 with a value preset in the reference value setting apparatus 14 and the output signal 15 is produced when they coincide with each other.

The output signal 15 allows injection speed switching, injection pressure switching as part of injection process control or switching-to-holding pressure. Moreover, resin pressure at the front end of a screw cylinder or in a mold cavity instead of the injection ram pressure may be detected to effect the same control.

Normally when an injection molding machine is operated, the screw position immediately prior to the injection process unavoidably deviates from the value for setting the backmost position to which it can move back. According to the present invention, however, not only the whole stroke but also each stroke in each part of a switched speed process conforms to the set value despite the deviation. Thereby, the shot volume is set constant. The holding pressure process is normally carried out with a certain cushion quantity left to prevent a molded product from generating a sink mark during injection molding but the cushion quantity increases as the deviation of the screw position toward the ram side increases and vice versa. Therefore, the volume and weight of molten resin to be filled in the cavity as an actual molded product is kept constant.

According to the present invention, further, the injection conditions may be held constant for whatever the weighing value is set as long as the molding conditions are so arranged as to leave the cushion quantity. Thereby, unlike the prior practice, it is unnecessary to use utmost care to set the weighing value. That is, even if the weighing value is set rather large by mistake, no over-packing will not occur as in the conventional method. In consequence, the present invention is of use for preventing the mold from being damaged.

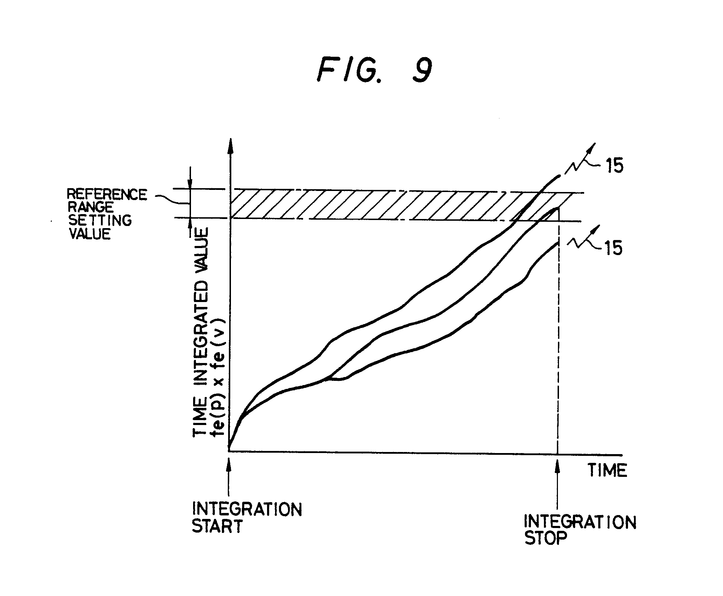

Fig. 7 is a diagram showing a fourth embodiment of the present invention.

An electrical signal (e.g., voltage signal) from the pressure sensor 6 for detecting hydraulic pressure of an injection plunger is subjected by an integrator 11 to time integration over a preset time and the value is compared by a comparator 13 with

a value preset in a reference value (or range) setting apparatus 14, whereby the output signal 15 is produced when the comparative requirements are not satisfied.

The preset time is set by an integration time setting apparatus 16 for any given time period from the commencement of injection up to switching-to-holding pressure may be set.

Molding irregularities cannot be detected at one point as is conventionally done, for example, an injection plunger pressure range is monitored at time $t_4$ only in Fig. 2 or 3. On the other hand, monitoring at several points $t_1$-$t_4$ shown in Fig. I makes the monitoring method and apparatus complicated. The above problem is solved by comparatively monitoring the values obtained through the integrator II shown in Fig. 7 according to the present invention.

The integration time (e.g., $t_0$-$t_4$ in Fig. 3) need not be a fixed time as described above but may be set in any given way to cover, for example, the filling time, i.e., from the commencement of injection up to switching-to-holding pressure time.

Fig. 8 is a diagram showing a fifth embodiment of the present invention similar to that of Fig. 4.

A value detected by the pressure sensor 6 for detecting injection ram pressure is converted by the injection ram pressure converter 8 into voltage, assumed to be $f_e(p)$. A value detected by the injection speed sensor 7 is converted by an injection speed voltage converter 9 into a voltage assumed to be $f_e(v)$.

Moreover, the above two voltages $f_e(p)$ and $f_e(v)$ are multiplied together by a multiplier 10. An integration starting trigger generator 12 is actuated simultaneously with the commencement of injection and the product of the above two voltages is subjected by an integrator II to time integration to produce $\int f_e(p) \bullet fe(v) \bullet dt$. When the holding pressure process is terminated, an integration terminating trigger generator 17 is simultaneously actuated and the integrating operation of the integrator II is terminated. Thereafter, the integrated value is transmitted to the comparator 13. The value thus integrated ($\int f_e(p) \bullet f_e(v) \bullet dt$) is compared by the comparator 13 with a value range set in the reference range setting apparatus 14 and an output signal 15 is produced when the integrated value is out of the range. This operation is performed as shown in, for example, Fig. 9.

The output signal 15 may be applied to an alarm for indicating irregular molding conditions or a molding irregularity discriminator for discriminating an irregular molded product.

Since the present invention is arranged with the above-described methods, the total energy applied to the mold cavity during the whole injection process can be monitored on a shot by shot basis and monitoring accuracy is improved because momentary data is not used as in the conventional methods. The signal 15 may be applied to an alarm for indicating irregular molding conditions or a molding irregularity discriminator for discriminating an irregular molded product.

## Claims

I. A method of controlling an injection molding operation, characterised by the steps of applying a driving pressure from a ram (13) to an injection screw (2) to move the screw at an injection speed to force resin to fill a mold cavity (5); detecting the value of the injection speed of the screw (2) and/or the value of an operational pressure, the operational pressuring being the driving pressure on the ram or the pressure of the resin in front of the screw, or the pressure in the mold cavity; converting the detected value or values into an electrical signal; and integrating the electrical signal over a period of time to produce an integrated signal.

2. A method according to Claim I, wherein the detecting step detects the injection speed of the screw (2) and the driving pressure on the ram (3); the converting step converts the detected injection speed and the detected driving pressure into first and second electrical signals respectively and multiplies together said first and second electrical signals to form a product signal; and the integrating step integrates the product signal over the period of time which begins from a predetermined point of the applying step to produce the integrated signal; and further comprising the steps of comparing the integrated signal with a preset value; and outputting an output signal when the integrated signal conforms to the preset value.

3. A method according to Claim 2, further comprising switching the step of applying the driving pressure to a holding pressure process in response to the output signal.

4. A method according to Claim 2, further comprising switching the step of applying the driving pressure to reduce the injection speed in response to the output signal.

5. A method according to Claim I, wherein the detecting step detects the injection speed of the screw; the converting step converts the detected injection speed into the electrical signal; and the period of time over which the signal is integrated begins at the beginning of the step of applying the driving pressure; and further comprising the steps of comparing the integrated signal with a preset value; and outputting an output signal when said integrated signal conforms to the preset value.

6. A method according to Claim 5, further comprising switching said step of applying the driving pressure to reduce the injection speed.

7. A method according to Claim 5, further comprising switching the step of applying the driving pressure to reduce the driving pressure.

8. A method according to Claim 5, further comprising switching the step of applying the driving pressure to a holding pressure process.

9. A method according to Claim I, wherein the detecting step detects the operational pressure; the converting step converts the detected operational pressure into the electrical signal; the period of time over which the signal is integrated ends at a predetermined time to produce the integrated signal at the predetermined time; and further comprising the steps of comparing the integrated signal with a preset reference value or with a range of preset reference values; and outputting an output signal when the integrated signal deviates from the present reference value or the range of preset reference values.

10. Injection molding apparatus comprising a mold cavity (5), an injection screw (2), a ram (3), and means for applying a driving pressure from the ram (3) to the injection screw (2) to move the screw at an injection speed to force a resin to fill the mold cavity (5), characterised by means (7, 6) for detecting the value of said injection speed (f(v)) of the screw and/or the value of an operational pressure, the operational pressuring being the driving pressure, the pressure of the resin in front of the screw (2), or the pressure in the mold cavity - (5); means (8, 9) for converting the detected value or values into an electrical signal; and means (II) for integrating the signal over a period of time to produce an integrated signal.

II. Apparatus according to Claim I0, wherein the detecting means (7, 6) detects the injection speed - (f (v)) of the screw (2) and the driving pressure (f-(p)) of the ram (3); the converting means (9, 8, I0) converts the detected injection speed and the detected driving pressure into respective first and second electrical signals (fe(p), fe(v)) and multiplies together first and second electrical signals to form a product signal (fe(p). fe(v)); and the integrating means (II) integrates the product signal over the period of time which begins from a predetermined operating point of said means for applying the driving pressure to produce the integrated signal; and the apparatus further comprising means (I3) for comparing the integrated signal with a preset value (I4) and means (I5) for outputting an output signal when the integrated signal conforms to the preset value.

I2. Apparatus according to Claim II, further comprising means for switching the driving pressure applying means to a holding pressure process in response to the output signal.

I3. Apparatus according to Claim II, further comprising means for switching the driving pressure applying means to reduce the injection speed in response to the output signal.

I4. Apparatus according to Claim I0, wherein the detecting means (7) detects the injection speed (f(v)) of the screw (2); the converting means (9) converts the detected injection speed into the electrical signal; and the integrating means (II) integrates the electrical signal over the period of time which begins with the initiation of the driving pressure applying means to produce said integrated signal; and the apparatus further comprising means (I3) for comparing the integrated signal with a preset value (I4) and for outputting an output signal (I5) when the integrated signal conforms to the preset value.

I5. Apparatus as recited in Claim I4, further comprising means for switching the driving pressure applying means to reduce the injection speed.

I6. Apparatus according to Claim I4, further comprising means for switching the driving pressure applying means to reduce the driving pressure.

I7. Apparatus according to Claim I4, further comprising means for switching the driving pressure applying means to a holding pressure process.

I8. Apparatus according to Claim I0, wherein the detecting means (6) detects the operational pressure; the converting means (8) converts the detected operational pressure into the electrical signal (fe(p)); and the integrating means (II) integrates the electrical signal over the period of time which ends at a predetermined time to produce the integrated signal at the predetermined time; and the apparatus further comprises means (I3) for comparing the integrated signal with a preset reference value (I4) or a range of preset values; and means for outputting an output signal (I5) when the integrated signal deviates from the preset reference value or range of values.

## FIG. 1

## FIG. 2

## FIG. 3

# FIG. 4

# FIG. 5

PRESET VALUE

16'' 16' 16

$\int fe(P) \cdot fe(v) dt$

TIME INTEGRATED VALUE
fe(P)·fe(v)

TIME

INTEGRATION
START

# FIG. 7

PRESSURE
SENSOR — 6

INTEG.
TIME — 16

REF. — 14

$f(P)$

$\int$ — 11

$\int f(P) dt$

COMP. — 13

15

# FIG. 6A

1    2       3

7

f(v)

| VOLTAGE CONVERTER |—9

fe(v)

12—| TRIGGER |

∫ —11

∫fe(v)dt

14—[ ☐☐☐ ] → | COMP. |—13
REF.

--15

# FIG. 6B

1    2       3

1-a

6

f(p)

| VOLTAGE CONVERTER |—8

6—| PRESSURE SENSOR | fe(p)

∫ —11

∫fe(p)dt

14—[ ☐☐☐ ] → | COMP. |—13
REF.

--15

0 228 799

# FIG. 8

FIG. 9

- REFERENCE RANGE SETTING VALUE
- TIME INTEGRATED VALUE fe(p) x fe(v)
- TIME
- INTEGRATION START
- INTEGRATION STOP
- 15
- 15

0 228 799